# EUROPEAN PATENT APPLICATION

(11) **EP 4 800 582 A1**
(43) Date of publication of application: **02.09.2026**
(21) Application number: 25305259.1
(22) Date of filing: 26.02.2025
(51) Int. Cl.: G06F 21/32, G06F 21/45

(54) **METHOD FOR ONLINE BIOMETRIC TRAIT ENROLLMENT OF A USER**

(71) Applicant: THALES DIS FRANCE SAS, 92190 Meudon (FR)
(72) Inventor: CABROL, François, Fullerton, CA, 92832 (US); YU, Miles Christian, Corona, CA, 92878 (US); GALLAND, Antoine, 13004 Marseille (FR)
(74) Representative: Quintero Romero, Manuel

(57) **Abstract**

The present invention provides a method for online biometric trait enrollment of a user, wherein the method comprises the steps of:
• providing, by the user, identifying information during an online enrollment session through a personal device,
• capturing, during the online enrollment session, by a built-in camera of the personal device, a first picture comprising the face of the user, and a second picture comprising the face of the user and a biometric trait of the user,
• capturing, during the online enrollment session, by the built-in camera of the personal device or a secondary camera, a third picture comprising the biometric trait of the user,
• assessing whether the face and the biometric trait of the second picture belong to the same person, whether the faces in the first and second pictures belong to the same person, and whether the biometric traits in the second and third pictures belong to the same person, and
• if positive, associating the biometric trait of the third image with the user and enrolling the user with the associated biometric trait.

## Description

### TECHNICAL FIELD

The present invention relates to the technical field of biometric enrollment and, namely, to the field of online biometric enrollment for issuing official documents such as Visa, ID docs, etc.

In advantageous embodiments, the present invention allows a document applicant to perform the necessary biometric enrollment remotely, e.g., from their home, while being video-supervised by an agent, e.g., authority employee, attaining the same level of security as existing onsite enrollment.

### BACKGROUND OF THE INVENTION

Today, when a government or official institution wishes to issue an official document, e.g., Visa, passport, ID card, driving license, etc., to a document applicant, e.g., citizen, it collects in a controlled environment and very secure manner his/her necessary biometrics traits (e.g., face, fingerprint(s)) to be associated to his/her profile. A typical enrollment process first captures high-quality biometric samples (often multiple samples), converts these physical characteristics into digital templates (e.g., features -minutae- extraction), stores the templates securely, and creates a link between the person's identity and their biometric data.

The goal is for the system to be able to re-identify a person whose biometric traits matches the ones enrolled in the official registry. Biometric enrollment and verification are not only used today in government ID programs, border control, or secure facility access, but also in banking and financial services, healthcare systems, or even employee attendance systems.

The biometric enrollment is part of a larger, little-flexible and tedious process where the document applicant in general needs to
(1) first fill-out an online application form,
(2) schedule an onsite interview appointment with the authority employee,
(3) collect and bring any supporting documentation (e.g., passport, appointment receipt, ICAO-formatted picture, etc.), and, when onsite, (4) pass the security check or security clearance,
(5) pass the in-person interview including biometric capture and enrollment through certified hardware (e.g., fingerprint(s) scanner), and,
if document issuance is granted, (6) return in some days for document collection.

Therefore, in-person biometric enrollment is tedious for the applicant mainly because he/she needs to find an appointment (up to months in advance), and needs to travel to the agency's premises that may be located far or even in a different country. This poses some drawbacks for the document issuer as well, because the overall system depends on the number of certified equipment (e.g., scanners) available onsite, and incurs in non-negligible security, administration staff costs and associated real estate costs; thus, hindering the scalability needed these days to cope with e.g., the generalized population increase.

To mitigate this situation, a new generation of digital-only documents (e.g., e-Visa) has been proposed to replace the legacy ones that can be requested through online application portals thus enhancing both security and convenience. However, they completely skip the biometric enrollment (e.g., fingerprint(s) capture) or delegate it to the moment when the applicant faces in-person an authority agent equipped with the certified equipment. Accordingly, it does not attaint the same level of security, and the scalability issues persists.

Thus, there is a need in the industry for a user-friendly biometric enrollment that attains the same level of security as existing onsite enrollment at authority premises.

### SUMMARY OF THE INVENTION

The present invention provides a solution for the problems by a method for online biometric trait enrollment of a user according to claim 1, a method for an agent to grant a document issuance for a user according to claim 8, and a computer (program) application according to claim 14. In dependent claims, preferred embodiments of the invention are defined.

In a first inventive aspect, the invention provides a method for online biometric trait enrollment of a user. This method comprises the steps of:
- providing, by the user, identifying information during an online enrollment session through a personal device,
- capturing, during the online enrollment session, by a built-in camera of the personal device, a first picture comprising the face of the user, and a second picture comprising the face of the user and a biometric trait of the user,

- capturing, during the online enrollment session, by the built-in camera of the personal device or a secondary camera, a third picture comprising the biometric trait of the user,
- assessing whether the face and the biometric trait of the second picture belong to the same person, whether the faces in the first and second pictures belong to the same person, and whether the biometric traits in the second and third pictures belong to the same person, and
- if positive, associating the biometric trait of the third image with the user and enrolling the user with the associated biometric trait.

Unlike prior art solutions that requires to capture the biometric trait(s) in-person at authority's premises, the present invention enables the user to perform biometric enrollment conveniently, e.g., remotely from home, using his/her personal device, e.g., smartphone.

The personal device can be any type of portable computing device e.g., smartphone, laptop computer, mobile phone, navigation device, game console, desktop computer system, workstation, Internet appliance and the like, or a stationary device such as an airport-placed kiosk provided with a scanner and cameras for capturing images.

In particular, the user personal device (e.g., assumed as smartphone herein for illustrative purposes) launches a dedicated software application installed therein, or connects through a web browser of the device. For instance, if the user is applying for document issuance, the software application that supports biometric trait enrollment can be the same as the issuer-provided one or, instead, by the time the user is prompted to gets his/her biometric traits captured, a separate flow can be triggered (e.g., Application Program Interface, API, called) requesting the biometric enrollment services through separate application, where the user is guided to perform the steps of the present invention.

Be as it may, the user needs first to authenticate him/herself by providing identifying information. Depending on the use case, the kind of attributes or document type requested may differ. In a particular embodiment, the identifying information provided by the user during the online enrollment session is a government-issued document such as a national ID card, a passport, or a driving license card. In a particular embodiment, in case the applicant is renewing his/her official docs, the submitted document is the one about to expire.

In a non-limiting example, the user may perform a Know-Your-Customer, KYC, process (integrated in the mobile phone application, or through a API service called) where he/she takes pictures of a suitable identifying document (e.g., ID card), takes a selfie, and the system extracts (e.g., Optical Character Recognition, OCR,-based) the written values on the document, validates the information, and performs a face matching between the selfie and the document's portrait. In another example, the mobile application is a government-provided one, and the user is authenticated otherwise e.g., via account identifier, certificate installed, or any other means allowing the user to be uniquely identified by the service. In a further complementary or alternative example, the identifying information can be a pre-registered identifier assigned to the user, as document applicant, when requesting the online service or after having scheduled an online appointment.

Referring back to the invention, a set of pictures are then captured by the camera(s) of the personal phone: either actively by the user (e.g., click-based captures), or passively by the device i.e., when certain pre-defined conditions are met, such as the scene shows the specific features that needs to be captured at that specific moment with e.g., a sufficient quality (e.g., making them recognizable). Preferably, the set of pictures are frames of a video media, that is, a film recording of the user that is packaged and transmitted afterwards to an assessment module, or a video streaming (e.g., during a video call) supervised e.g., by the authority agent.

At least three pictures, or video frames, are taken:
- one focussing on user's face, that may be matched against the portrait of a submitted ID doc (e.g., via the KYC process explained),
- another picture showing simultaneously the user's face and the body part containing the biometric trait, which allows proving that both belong to the same person, and
- a third one focussing on the biometric trait to be enrolled, such as user's fingerprint(s) (e.g., 10-finger, only thumbs, etc.), user's hand(s) (e.g., for palmprint(s) or hand geometry), or user's eyes (e.g., for iris).

The goal of the third picture is to capture a high-quality biometric sample (or a series of pictures), that is/are post-processed (according to standard enrollment processes) into digital templates (e.g., features extraction), to be securely stored in association with user's identity and, optionally, other biometric traits giving rise to the enrollment.

In particular, the biometric trait is captured using a contactless technology that allows its capture without the user physically touching any sensor surface. Contactless systems typically use advanced cameras (e.g., increased sensor resolution and accuracy), depth or infrared cameras (e.g., for 3D images), or other optical methods to capture the images from a short distance away, without physical contact. Today, camera hardware can be enhanced up to capture high-quality, processable, 500ppi (e.g., fingerprint) images using the cameras on the smartphone. This has been proven enough to act as the high-resolution templates for subsequent verifications. An example of a smartphone equipped with contactless fingerprint grade cameras is e.g., the Samsung Galaxy S23, which has a front camera good enough to get a low fidelity fingerprint capture (provided lighting is acceptable, or e.g., that the fingers are illuminated by the front LCD), and a rear camera which can capture high fidelity pictures good enough for enrollment purposes.

Apart from the enrollment post-processing methods, other techniques such as image quality enhancement, liveness detection, formatting, or normalization (e.g., silhouette recognition, de-skewing, cropping, etc.) can be enforced to ensure templates of acceptable quality.

In a particular embodiment, the personal device is a mobile phone equipped with front and rear cameras; wherein the rear camera is the one located on the back of the mobile phone and has higher resolution than the front camera, which is located on or around the screen of the mobile phone. Since today's rear cameras has better quality images than front ones, the built-in camera according to the invention (for taking first and second pictures) is the front camera, while the secondary camera (for the third picture) is the rear camera.

Still, the loss of physical contact in the contactless cameras gives rise to security risks. The invention sorts this out by assessing that the faces and the biometric traits of the pictures belong to the same person, and, because the selfie may have been matched against a submitted ID doc's portrait, it can be assured that they all belong to the user.

These assessments can occur in-situ through the personal device or can be requested via a communication network to a remote server-based matching and analysis system comprising e.g., Artificial Intelligence models inferring if the faces and biometric traits belong to the same user. Thus, the personal device will only capture or get captured the pictures or video and send them together with a matching request to backend services. Additionally, or alternatively, the assessment can be manually done by an authority agent participating in the video call.

As mentioned, in a preferred embodiment, the first and second pictures are frames of a video media. The transition from the first to the second picture occurs maintaining the face and the biometric trait always recognizable. In particular, the second picture further comprises any body part linking the face with the biometric trait of the user. That is, if the biometric trait is a fingerprint, the first picture would be a selfie of the user then presenting his hand, rendering the upper part body visible (e.g., at least face, shoulder, arm, palm facing the camera).

Moreover, after the second picture, the video may transition to the third picture by moving forward the user's hand towards the foreground and holding the hand at a sufficient distance (e.g., to ensure focus and prevent blurriness or other defects produced by micromovements). Additionally, or alternative, the user's hand can surround the phone positioning the open palm towards the back side of the phone (where the rear camera is). In a particular embodiment, the user can receive instructions (e.g., voice, arrows, messages) guiding him/her during the enrollment process. This improves enrollment success and hence user satisfaction.

This process can be supervised by an agent, for instance, if the goal is to conveniently issue an official document.

In a second inventive aspect, the invention provides a method for an agent to grant a document issuance for a user, wherein the method comprises the steps of:
- starting, by the user or the agent, an online enrollment session,
- enrolling, by the agent, the user with an associated biometric trait according to any of the embodiments of the first inventive aspect, and
- granting, by the agent, the document issuance for the user.

As part of this process, the user, herein refer to as document applicant, can request the document issuance through the mobile application and get a video call appointment with the authority agent. Otherwise, when the biometric trait enrollment happens without human supervision (e.g., Al-supported supervision), the document issuance session can be automatically trigger at user's convenience, so all information is automatically gathered rendering its final review and granting to the human agent, if needed, asynchronously.

Advantageously, the solution is easily scalable because it does not depend on having certified biometric scanners at the authority's premises.

In a particular embodiment, the document to be issued is one of the following: an electronic or paper-based Visa, a renewed passport, a renewed national ID card, a renewed national driving license, and/or renewed private-public key pair file and associated certificate.

After the grant, the issued document can be collected by the user as per today's situation. For instance, for physical formats (e.g., paper-based Visa, ID card, passport, etc.), the user may still need to visit the authority premises but, for digital-only format, such as e-Visa, the user can receive it directly through the mobile application, which makes the whole process securer and more convenient than today.

In a particular embodiment, the agent is an agency employee, and the online enrollment session supports a video call between a mobile application installed in the mobile phone of the user and a web application at the agent's side. Advantageously, the video monitoring provides the same level of trustworthiness as an in-person, onsite enrollment.

In an alternative embodiment, a video call is launched between a second electronic device of the user, such as a personal PC, and the web application at the agent's side for monitoring the online enrollment session through the mobile application installed in the mobile phone of the user. This video call is e.g., alternative or additional to the above-described smartphone-agent video call.

In other words, there is a "main" video call between the user's PC and the web application at the agent's side, while the online enrollment session happens through the mobile application installed in the mobile phone of the user. The recording from the mobile phone can be also monitored on-line by the agent (hence the "secondary" video call). To this regard, the user and agent launch the video call using their respective PCs and, at the time of enrolling the user's biometrics, they also securely connect the mobile application installed in the user's mobile phone with the agent's web application so that the agent advantageously has a broader view of the user's surroundings. Within this embodiment, the phone's mobile application can send the separate pictures or upload a video stream from where the relevant frames are taken as described above.

In a particular embodiment, the face matching between first and second pictures, and assessment that the biometric traits from the second and third pictures belong to the same person is performed manually by the agent. Alternatively, or additionally, they can be assisted by an Artificial Intelligence tool.

In a particular embodiment, the Artificial Intelligence tool supervises that the transition from the first to the second picture occurs maintaining the face and the biometric trait of the user always recognizable.

In a third inventive aspect, the invention provides a computer (program) application installable in a personal mobile phone of a user for online biometric trait enrollment thereof, wherein the application is configured to:
- checking the personal mobile phone configuration, version, and health status against pre-defined conditions, and, if approved, start an online enrollment session with an agent,
- receive, from the user, identifying information,
- receive a first picture comprising the face of the user, and a second picture comprising the face of the user and a biometric trait of the user, wherein both first and second pictures are captured during the online enrollment session by a built-in camera of the personal device,
- receive a third picture comprising the biometric trait of the user that has been captured by the built-in camera or a secondary camera of the personal device during the online enrollment session,
- assessing, by the application or a delegated service, whether the face and the biometric trait of the second picture belong to the same person, whether the faces in the first and second pictures belong to the same person, and whether the biometric traits in the second and third pictures belong to the same person, and
- if positive, associating the biometric trait of the third image with the user and enrolling, by the application or the delegated service, the user with the associated biometric trait.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure depicts a schematic view of an online biometric trait enrollment during document issuance according to embodiments of the present invention.
- Figure 2: This figure shows a method for an issuer to issue a document after agent's grant according to embodiments of the present invention.

### DETAILED DESCRIPTION OF THE INVENTION

As it will be appreciated by one skilled in the art, aspects of the present invention may be embodied as a method for online biometric trait enrollment of a user, a method for an agent 6 to grant a document issuance, a computer (program) application 2 installable in a personal mobile phone 1 of the user, or the personal mobile phone 1 itself.

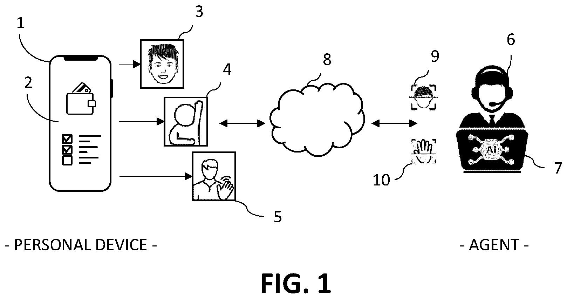

In **figure 1****,** it is schematically represented an embodiment of an online user - agent 6 communication during a biometric trait enrollment for document issuance. Similarly, the biometric trait enrollment shown herein can be for updating or correcting a wrongly enrolled user's biometric trait, for which only a fresh biometric trait is needed (i.e., without any subsequent document issuance). For illustrative purposes, it is assumed that the user wishes to get an e-Visa, and then uses his/her personal device 1 to start the request and, if needed, get an appointment with an authority agent.

The personal device 1 is shown as a mobile phone. The mobile phone includes one or several (micro)processors (and/or a (micro)controller(s)), as data processing means, comprising and/or being connected to one or several memories, as data storing means, comprising or being connected to means for interfacing with the user, such as a Man Machine Interface (or MMI), and comprising or being connected to an Input/Output (or I/O) interface(s) that are internally all connected, through an internal bidirectional data bus.

The I/O interface(s) may include a wired and/or a wireless interface, to exchange, over a contact and/or Contactless (or CTL) link(s), with the user. The MMI include a display screen(s), loudspeaker(s) and keyboard that allows the user to interact with the mobile phone. The MMI may be used for getting data entered and/or provided by the user. The mobile phone 1 further includes built-in camera(s), namely a front and a rear camera that can capture the surroundings of the user, including the user him/herself. Preferably, the built-in cameras (not shown) are RGB cameras.

The mobile phone memory(ies) may include one or several volatile memories and/or one or several non-volatile memories (not shown). The memory(ies) may store data, such as an ID(s) relating to the mobile phone or hosted chip, that allows identifying uniquely and addressing the mobile phone. The memory(ies) also stores the Operating System (OS) and applications which are adapted to provide services to the user (not shown). Among these applications, the mobile phone has a mobile application 2 installed that is configured to receive a request for biometric trait enrollment (either from the user or through an intermediary application) and get pictures (or video stream) from the built-in camera(s) to be further processed. This picture processing can be done in-situ by the application or delegated to a server-hosted backend service (not shown). That is, the mobile phone is configured to send information over a communication network 8 to a server end, either from the same application vendor or handled by other service provider. In particular, the application 2 and the backend infrastructure may communicate via one or more Application Program Interfaces, APIs, using HTTP over TLS. Instead of an installed application 2, the user can access any of these services through web browser.

The mobile application 2 can be e.g., distributed as a Software Development Kit, SDK, that will be used by each authority to create their app that they will publish in an app store to be downloadable by users with their mobile phones.

In further embodiments, the mobile application 2 connects to a web app 7 (e.g., cloud-based and multi-tenant) from where an authority agent 6 monitors the user during the biometric trait enrollment. In short, the agent 6 (i.e., authority staff) watches the images from the built-in camera(s) recording the user and makes sure that the face and biometric trait (e.g., fingerprint(s) in these examples) belong to the same person, that they are genuine, and that no other party intervenes during this enrollment. The user may have taken an appointment online and pre-submitted the needed documentation for the agent to successfully supervise the enrollment process (e.g., define scope of the request, identify him/herself, get issuer pre-authorization, etc.).

There can be Al models inferring if the faces and biometric traits belong to the same person in a remote server-based matching and analysis system either assisting the human agent 6 or fully replacing it. These one or more Al models can be Convolutional Neural Networks trained to e.g., detect different objects in the captured pictures, classify them, perform OCR analysis of submitted docs, perform face matching 9 between user's face and doc's portrait, perform biometric trait feature extraction 10, and/or perform biometric trait verification, etc. These Al models can be embedded at mobile app 2, running at web application 7 end, or preferably be cloud-hosted in vendor backend server(s) accessible through API by both the mobile app 2 and the web app 7.

As mentioned, the agent 6 can be a human agent, an Al-based agent, or both, but, for sake of illustration, hereinafter it is considered that there is an Al-assistant installed at web application side helping the human agent 6.

The user launches the mobile application 2 through his/her phone 1 and opens session with the human agent 6 through his/her web app 7. Preferably, a video call starts between the web app 7 and the mobile app 2, and, more preferably, the agent 6 automatically receives the online image from every built-in camera(s) of the user phone 1. Thus, the agent 6 can check user's surroundings. The user submits, e.g., takes pictures of or shows to the built-in camera(s), the identifying information (e.g., his passport) for the agent to match its content with the document issuance request. The field values of the passport can be extracted, alongside the portrait, to perform face matching 9 with the user's face from a first picture 3 (or first video frame).

If face matching 9 succeeds, the agent 6 prompts the user to show on camera the biometric trait to be enrolled, preferably displaying the whole chain of body parts to the agent. That is, if the fingerprint(s) are to be enrolled, the user moves away his/her phone to make his/her upper part visible, namely, the face, the shoulder, the arm, and the open hand facing the built-in camera. These forms part of the second picture 4, and the agent 6 monitors that all the body elements remain always visible. The Al tool, through object detection and tracking functions, can check online that all these body parts remain visible from the first to second pictures, and that there are no interruptions or video manipulations hardly noticeable to the human eye.

Further, the agent 6 can prompt the user to perform specific movements, gestures, or signals, to discover any video injection attacks or other sophisticated manipulations in the video streaming.

Finally, the agent 6 prompts the user to show on camera e.g., his/her open palm and captures the fingerprint(s) picture at a distance. This is the third picture 5. Throughout these examples, it is exemplified that the biometric trait is at least one fingerprint. The Al tool can guide the user how to position the hand, or focus on the fingerprint itself (e.g., showing a hand silhouette red until user's hand is in position and at correct distance, turning then to green), to ensure a successful enrollment 10. As mentioned, the third capture can be a single one or a few depending on what is required for the use case, and the expected quality.

Additionally or alternatively, e.g., depending on the settings and status of the mobile phone 1, the mobile app 2 can set that the biometric trait capture with that particular mobile phone can only be done with the rear camera, since it has better quality. Therefore, the agent 6 also checks that the third picture 5 is taken taking into account actual mobile phone settings and conditions. Also, as backup, even if the mobile app allows the capture with the front camera, due e.g., to unsatisfactory lighting conditions, the agent 6 can prompt the user to turn some lights on, change the position, get another background, or shift to another camera, when possible.

Be as it may, the captured third image(s) 5 is/are post-processed at backend-services for e.g., quality checking (or enhancement), features extraction 10, and template creation. Similarly, it can be done by the agent's web app 7 itself. At the end, the agent 6 enregisters this captured third image(s) 5 (or template(s) derived therefrom) together with the user's identity.

As mentioned before, additionally, the user can launch the video call with the agent using his PC (not shown in the figures) and, at the time of enrolling his/her biometric traits, the associated mobile application installed in the user's mobile phone securely connects to the agent's web application so that the agent advantageously has a broader view of the user's surroundings.

Upon enrollment of the user's fingerprint, the agent can resume or pursue the standard procedure, in this case for issuing a e-Visa. The agent in turn requests the issuer, still through the web app, the issuance and, once issued, the e-Visa is retrievable from the mobile app by the user.

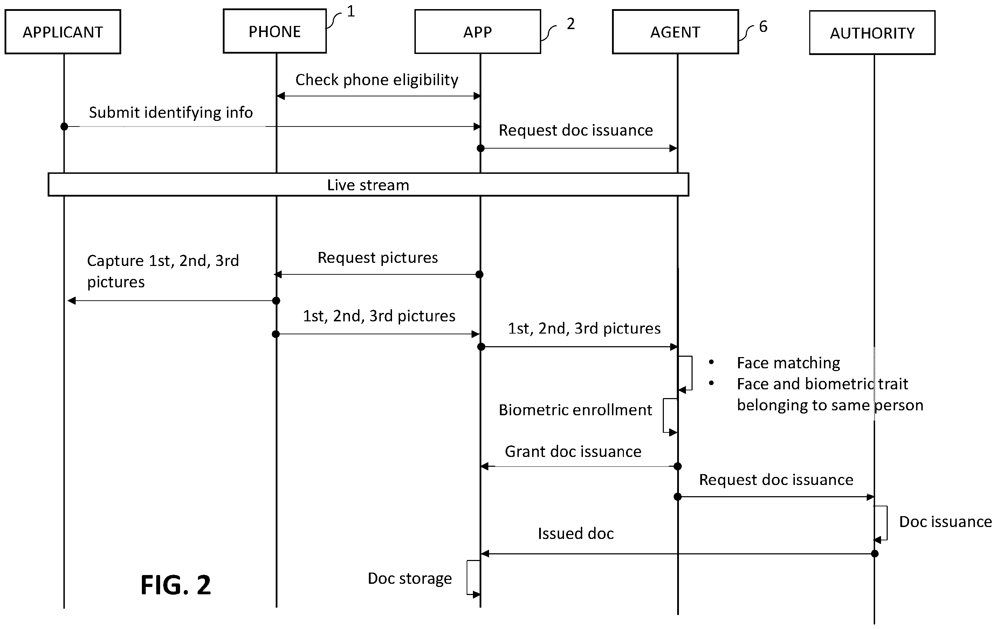

**Figure 2** depicts a method for the issuer to issue a document after agent's grant.

The solution relies on a mobile app 2, installed in the user's mobile phone 1. Upon installation, the mobile app 2 checks the phone eligibility and security for biometric trait capture, in particular, in these examples, for contactless fingerprint(s) scanning. That is, the mobile app 2 checks phone model, latest updates, cameras calibration and health (e.g., camera distortion), and security considerations such as the mobile phone is neither rooted, nor hooked. If the phone passes all the checks, it is allowed to launch enrollment sessions, otherwise, it is tagged as suspicious, the user informed, the application vendor notified, and any ongoing or future session aborted / rejected until remedy actions are performed.

Once the phone eligibility is successfully tested, the user 1 can launch the mobile app 2 check if there is any pending action spotted by the issuer (e.g., government), such as certificates renewal (e.g., for online IDs), passport expiration below time threshold, etc. The user can also choose voluntary actions such as requesting e-Visas. As part of these requests, assuming e-Visa request, the user fills out the standard form, including the submission of identifying info (e.g., passport number), indicates the travel reason, date of arrival, etc., pays the associated fees, and even takes an appointment for e-Visa issuance with an agent 6. The mobile app 2 collects all the info and sends it to the agent's side.

When the appointment time arrives, the user (now document applicant) and an appointed authority agent 6 start a live video stream. The user may wait in a waiting room until the agent 6 pulls him/her in the call automatically opening the built-in cameras. The agent requests the user to provide identifying info, e.g., the one used during document issuance request, and the agent verifies its content. As mentioned, while the user shows to the built-in camera his/her passport bibliographic page, an OCR tool can automatically extract the field values, and match them against the submitted info. The passport portrait can be also extracted.

The agent 6 instructs the applicant to take a selfie 3 ensuring good lightning conditions and face framing e.g., avoiding tilting, distortion, non-white backgrounds, etc. to approach the face picture, i.e., 1st picture, as much as possible to an ICAO-formatted picture. The agent, through the mentioned embedded AI tool, can do a face matching 9 with the passport portrait.

The agent 6 then instructs the applicant to show his/her open hand to the camera while visualizing the face, takes a second picture 4, and then prompts the user to approach the open hand to the built-in camera until a sufficiently good-quality picture 5 can be taken to extract fingerprint(s) features 10. This process can be guided by signals (e.g., coloured hand silhouette) to ensure successful enrollment. The user can be prompted to use the rear camera of the phone to take the third picture 5 (on top of or) instead of the front one. In that case, the user captures the biometric trait(s) using the higher fidelity rear camera. The lower fidelity biometric template from the second picture is to be compared to the biometric template from the third picture to determine that the biometric traits belong to the same person.

In this situation, additionally, how the hand surrounds the phone, disappears from the front camera image, and starts appearing in the rear one can be closely monitored by the agent 6. Namely, that the transition from front to rear camera is smooth, happens naturally, and follows similar patterns allowing the agent to decide whether there is any suspicions action. The agent can be assisted once again by the monitoring Al tool that e.g., can match user's behaviour with known patterns.

The agent can ask questions or request gestures on the fly to the user to check there is no video injection attacks. These questions can be part of a questionnaire specifically done for the expected document. For instance, for e-Visas, the agent can inquiry about user's residency, job, known people at the target country, emergency contacts, etc.

The first 3, second 4, and third 5 pictures may be included into an enrollment file for auditability and traceability purposes. The agent 6, e.g., Al assisted, checks for irregularities such as interruptions, liveness, etc. and, if something that deviates from a pre-established procedure happens, it tags the enrollment as suspicious, aborts session, and asks the user to come to authority premises in person.

If all the assessments are successful, i.e., if the faces match 9, and it can be ascertained that the face and biometric traits pertains not only to the same person, but to the applicant, the agent proceeds with the enrollment associating user's identity to the just enrolled biometrics and then granting the e-Visa.

The agent 6 also contacts the issuer, or a delegated entity, requesting the issuance of the e-Visa. The issuer receives the enrollment file, comprising, *inter alia,* the user's passport picture, original form, replies to agent's questionnaire (if any), first 3, second 4, and third 5 picture, face matching 9 result, and biometric trait enrolled 10.

The issuer, or a delegated entity, may perform further security checks and hence approve or deny the issuance of the e-Visa. If approved, the issuer publishes the e-Visa in the mobile app 2 for its persistent storage.

As mentioned, the invention provides a more convenient way to apply for official docs., and undergoes any necessary steps, e.g., biometric trait enrollment, remotely. It is easily scalable because it doesn't rely on certified hardware.

## Claims

1. Method for online biometric trait enrollment of a user, wherein the method comprises the steps of:
• providing, by the user, identifying information during an online enrollment session through a personal device,
• capturing, during the online enrollment session, by a built-in camera of the personal device, a first picture comprising the face of the user, and a second picture comprising the face of the user and a biometric trait of the user,
• capturing, during the online enrollment session, by the built-in camera of the personal device or a secondary camera, a third picture comprising the biometric trait of the user,
• assessing whether the face and the biometric trait of the second picture belong to the same person, whether the faces in the first and second pictures belong to the same person, and whether the biometric traits in the second and third pictures belong to the same person, and
• if positive, associating the biometric trait of the third image with the user and enrolling the user with the associated biometric trait.

2. The method according to claim 1, wherein the first and second pictures are frames of a video media, and wherein the transition from the first to the second picture occurs maintaining the face and the biometric trait always recognizable.

3. The method according to any of claims 1 or 2, wherein the second picture further comprises any body part linking the face with the biometric trait of the user.

4. The method according to any of claims 1 to 3, wherein the personal device is a mobile phone equipped with front and rear cameras, the rear camera, located on the back of the mobile phone, having higher resolution than the front camera, located on or around the screen of the mobile phone; wherein the built-in camera is the front camera and the secondary camera is the rear camera.

5. The method according to any of claims 1 to 4, wherein the biometric trait is at least one of the following traits: at least one fingerprint, at least one palmprint, at least one hand geometry, or at least one iris.

6. The method according to claim 5, wherein the biometric trait is at least one fingerprint image captured at a distance.

7. The method according to any of claims 1 to 6, wherein the identifying information provided by the user during the online enrollment session is a Government-issued document such as a national ID card, a passport, or a driving license card.

8. Method for an agent to grant a document issuance for a user, wherein the method comprises the steps of:
• starting, by the user or the agent, an online enrollment session,
• enrolling, by the agent, the user with an associated biometric trait according to any of the claims 1 to 7, and
• granting, by the agent, the document issuance for the user.

9. The method according to claim 8, wherein the document to be issued is one of the following: an electronic or paper-based Visa, a renewed passport, a renewed national ID card, a renewed national driving license, and/or renewed private-public key pair file and associated certificate.

10. The method according to any of claims 8 or 9, wherein the agent is an agency employee, and the online enrollment session supports a video call between an application installed in the mobile phone of the user and a web application at the agent side.

11. The method according to any of claims 8 to 10, wherein a video call is launched between a second electronic device of the user, such as a personal PC, and the web application at the agent's side for monitoring the online enrollment session through the mobile application installed in the mobile phone of the user.

12. The method according to any of claims 1 to 11, wherein the face matching between first and second pictures, and assessment that the biometric traits from the second and third pictures belong to the same person is either performed manually by the agent or assisted by an Artificial Intelligence tool.

13. The method according to claim 12 and claim 2, wherein the Artificial Intelligence tool supervises that the transition from the first to the second picture occurs maintaining the face and the biometric trait of the user always recognizable.

14. A computer (program) application installable in a personal mobile phone of a user for online biometric trait enrollment thereof, wherein the application is configured to:
• checking the personal mobile phone configuration, version, and health status against pre-defined conditions, and, if approved, start an online enrollment session with an agent,
• receive, from the user, identifying information,
• receive a first picture comprising the face of the user, and a second picture comprising the face of the user and a biometric trait of the user, wherein both first and second pictures are captured during the online enrollment session by a built-in camera of the personal device,
• receive a third picture comprising the biometric trait of the user that has been captured by the built-in camera or a secondary camera of the personal device during the online enrollment session,
• assessing, by the application or a delegated service, whether the face and the biometric trait of the second picture belong to the same person, whether the faces in the first and second pictures belong to the same person, and whether the biometric traits in the second and third pictures belong to the same person, and
• if positive, associating the biometric trait of the third image with the user and enrolling, by the application or the delegated service, the user with the associated biometric trait.
